# EUROPEAN PATENT APPLICATION

(11) **EP 1 150 512 A2**
(43) Date of publication of application: **31.10.2001**
(21) Application number: 01303701.5
(22) Date of filing: 23.04.2001
(51) Int. Cl.: H04N 7/24

(54) **Digital device, data input-output control method and system**

(30) Priority: 24.04.2000 JP 2000122209
(71) Applicant: Matsushita Electric Industrial Co., Ltd., Kadoma-shi, Osaka-fu, 571-8501 (JP)
(72) Inventor: Matsuuchi, Hiroshi, Hatsukaichi-shi, Hiroshima-ken (JP); Ozeki, Hideo, Mihara-shi, Hiroshima-ken (JP); Kagawa, Tetsuo, Hiroshima-shi, Hiroshima-ken (JP)
(74) Representative: Dempster, Benjamin John Naftel

(57) **Abstract**

The invention relates to a digital device for controlling the data input-output, which is able to control the data input-output that is optimum for the services provided by the digital device, even in the configuration having the competition for hardware resources. In the digital device 100, the configuration information 125 is registered so as to include the connection information 125b between a channel of the bus interface 111a and a plug, and the priority information 125c of channels of the bus interface 11a judged from the aspect of each plug. According to this configuration, by referring to the configuration information 125, it is possible to select a channel with the highest priority among channels of the bus interface 111a connected with a specific plug.

## Description

This invention relates to a digital device, and more specifically to a digital device controlling the input and output of data.

The serial bus interface standard of IEEE1394, which is advocated by IEEE (The Institute of Electrical and Electronics Engineers, Inc.), attracts attention as an interface standard for the high-speed data transfer between computers or home digital devices. Though the characteristics of this interface is to achieve the high-speed transfer rate of several 100 Mbits per second or to support the plug-and-play and the high flexible topology, the most characteristic point is the isochronous data transfer. That is to say, the isochronous data transfer is a synchronous type of data transfer, which is adapted to a case where the video or audio data is reproduced at the same time of the receiving, such data with which a user is annoyed when the data stream is interrupted in the middle of the reproduction (such data is called an isochronous stream hereafter).

Here is explained the technology (the content defined by IEC 61883-1) that inputs and outputs the isochronous stream between plural digital devices connected via serial bus (1394 bus) compliant with the serial bus interface standard of IEEE1394.

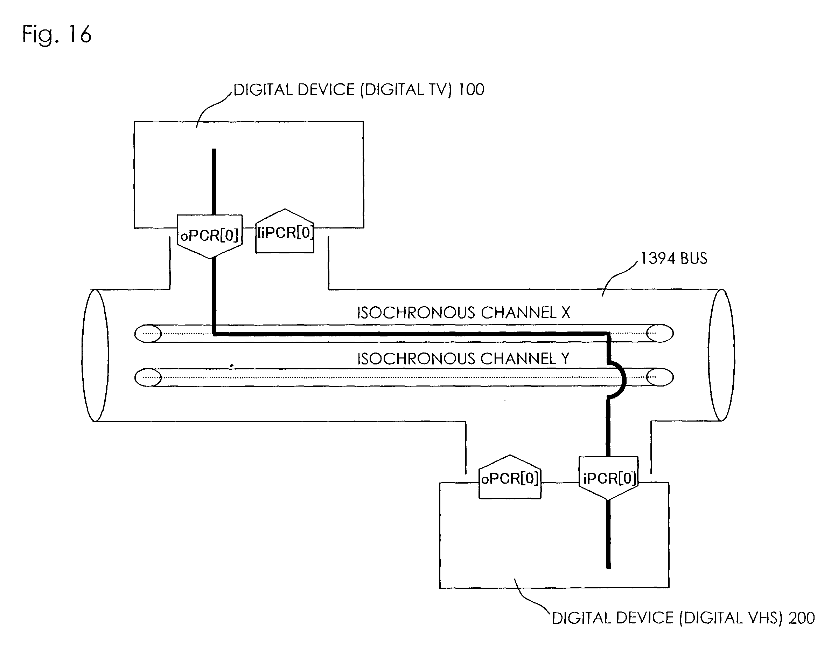

As shown in Fig. 16, the isochronous stream transferred from a digital device 100 to a digital device 200 is outputted from an output plug (not shown in the drawing) of the digital device 100 as an isochronous packet, and then inputted into an input plug (not shown in the drawing) of the digital device 200 via an isochronous channel X on the 1394 bus.

The input and output of the isochronous stream is controlled by an output plug control register (which is called oPCR hereafter) and an input plug control register (which is called iPCR hereafter), those plugs are logical plugs. The following explanation relates to the logical plugs. In opposition to the logical plug, the output plug and the input plug are called physical plugs.

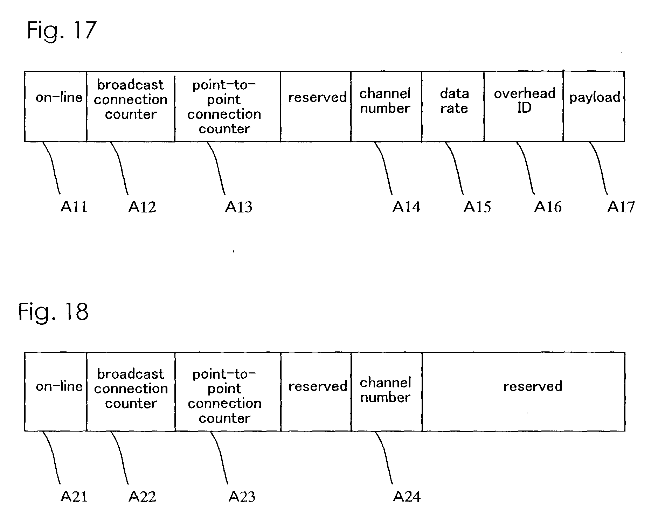

First, according to Fig. 17, the oPCR is explained here.

That is to say, an "on-line" area A11 indicates whether the output plug is on-line or off-line, and a "broadcast connection counter" area A12 whether the broadcast connection is established or not. The broadcast connection means to connect a plurality of output plug/input plug with an isochronous channel.

And a "point-to-point connection counter" area A13 indicates the number of point-to-point connection, and a "channel number" area A14 indicates the channel number of the isochronous stream to be outputted. The point-to-point connection means to connect one of output plug/input plug with an isochronous channel.

In addition, a "data rate" area A15 indicates the transfer rate of the isochronous stream to be outputted, and an "overhead ID" area A16 indicates an overhead (upper boundary) of the bandwidth necessary for outputting the isochronous stream. A "payload" area A17 indicates a maximum value of a packet size of the isochronous stream to be outputted.

Next, according to Fig. 18 the iPCR is explained here.

An "on-line" area A21 indicates whether the input plug is on-line or off-line, and a "channel number" area A24 indicates the channel number of the isochronous stream to be inputted. A "broadcast connection counter" area A22 and a "point-to-point connection counter" area A23 are the same as those of the area A12 and A13 of the above oPCR respectively, which explanation is not described here.

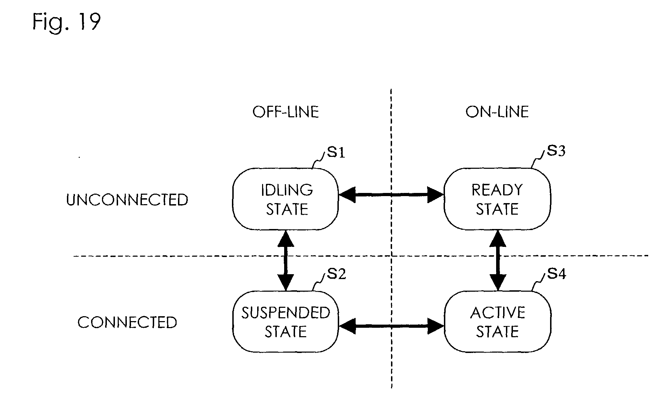

When the value of the "on-line" area A11(A21) described above is 1, the state is called "on-line", and when the value of this area A11(A21) is 0, the state is called off-line. Meanwhile, when the value of both the "broadcast connection counter" area A12(A22) and the "point-to-point connection counter" area A13(A23) is 0, the state is called unconnected, and when the value of both the area A12(A22) and A13(A23) is not 0, the state is called connected. Moreover, as shown in Fig.19, the state of off-line and unconnected is called an idling state S1, that of off-line and connected is a suspended state S2, that of on-line and unconnected is a ready state S3, and that of on-line and connected is an active state S4.

Then, according to Fig. 16, the following explanation refers to a procedure of data input-output when a digital VHS 200 records video data that a digital TV 100 is receiving, (for example, video data compressed according to MPEG).

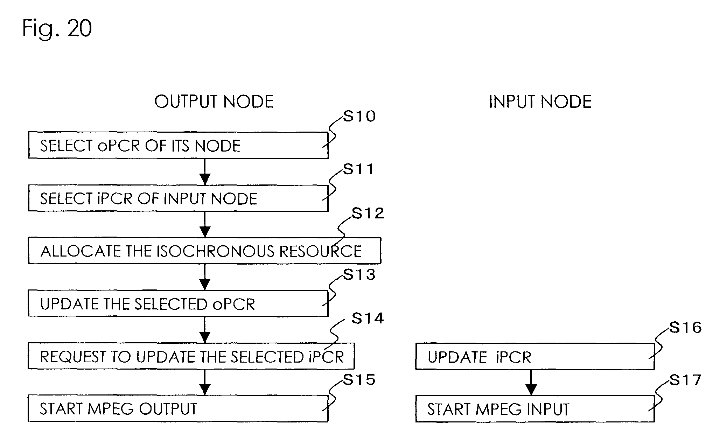

First, the digital TV, that is an output node 100, selects oPCR[0] of its node 100 and iPCR[0] of the digital VHS, that is an input node 200, and then obtains the channel number and bandwidth of isochronous stream (the entire of which is called the isochronous resource) from a node in accordance with a lock transaction information (Fig.20, Step S10 to S11 to S12), the node is an isochronous resource manager and not illustrated in the drawing.

The node of the isochronous resource manager is for managing the allocation of isochronous resources, and the lock transaction information is for locking a response node (in this case, that is the isochronous resource manager) and updating the specific register. Beside, in case where the output node 100 itself is the isochronous resource manager, it is enough to update the specific register in its node 100 and it need not to perform the lock transaction information.

Next, the output node 100 updates the oPCR[0] of its node 100 by applying the isochronous channel number X obtained as above to a value of "the channel number" area A14, the transfer rate and the overhead of isochronous bandwidth, those were applied to the calculation of the isochronous bandwidth, to a respective value of the "data rate" area A15 and the "overhead ID" area A16, and the number of present point-to-point connection to a value of the "point-to-point connection counter" area A13 (Fig.20, Step S13).

The output node 100, after designating the isochronous channel number X and the number of point-to-point connection obtained as above, sends the input node 200 the lock transaction information in order to update the "channel number" area A24 and the "point-to-point connection counter" area A23. After that, the output node 100 starts the MPEG type of data output (which is called MPEG output hereafter) according to the value of the oPCR[0] of the its node 100 (Fig.20, Step S14 to S15).

On the other hand, the input node 200, on receiving the lock transaction information sent as above, updates the "channel number" area A24 and the "point-to-point connection counter" area A23 of the iPCR[0] of its node 100, and then starts the MPEG type of data input (which is called MPEG input) according to the value of this iPCR[0] (Fig.20, Step S16 to S17).

As a result of this, the video data that the digital TV is receiving (that is the MPEG stream) is to be recorded by the digital VHS 200.

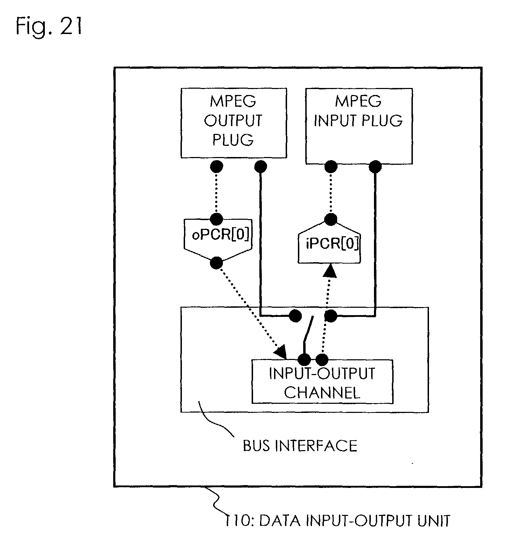

Fig. 21 is a conceptual diagram of the data input-output unit 110 of a conventional typical digital TV 100, illustrates the connection state of a physical plug/a logical plug and a bus interface (the solid line shows the physical connection state, and the dot line shows the logical connection state). The bus interface is a chipset (1394LSI) to implement the IEEE1394, and means for materializing the electrical interface between a physical layer and a data-linking layer composing a lower layer of the IEEE1394.

Accordingly, even while the MPEG stream is being outputted to the digital VHS 200, a user intends to input the MPEG stream outputted from the other digital VHS 200 into the digital TV; in this case, the input-output channel of the bus interface must be switched from the MPEG output plug to the MPEG input plug. That is to say, the conventional typical digital TV 100 has a problem that, even though it is provided with both the MPEG output plug and the MPEG input plug, because of the configuration that is provided with one input-output channel applicable to either one of the MPEG output or the MPEG input, it is not possible to perform both the MPEG input and the MPEG output at the same time.

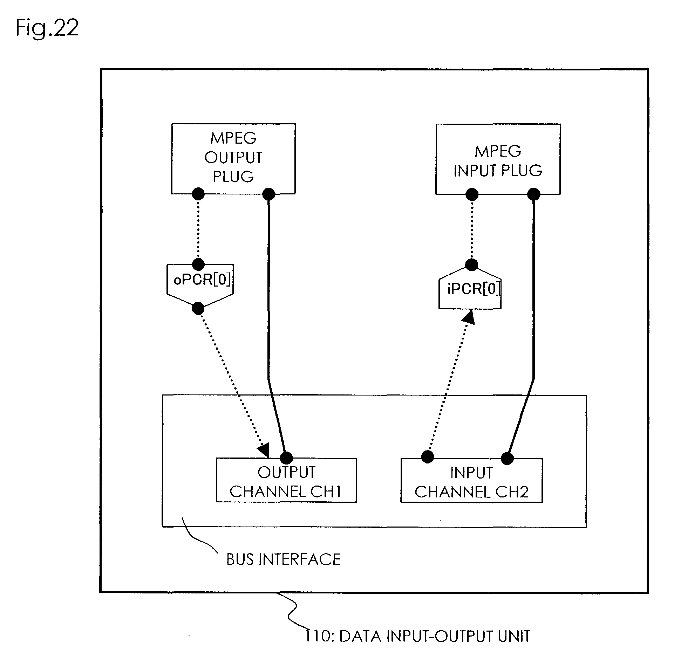

Therefore, it is proposed in recent years that a bus interface is provided with an output channel CH1 and an input channel CH2 respectively as shown in Fig. 22. In the digital TV 100 adopting such arrangement, the MPEG output plug is connected with the output channel CH1 and the MPEG input plug is connected with the input channel CH2, so that both the MPEG output and the MPEG input can be performed simultaneously.

However, if the services provided by the digital device are changed, it is natural that the data input-output control is changed according to the changed services. That is to say, even in the digital TV 100 adopting the above bus interface provided with the output channel CH1 and the input channel CH2 respectively, the change of the provided services may cause the inconveniences.

For instance, in case where the digital audio device reproduces the audio data (audio stream) included in the MPEG stream that the digital TV 100 is receiving, specifically when it is necessary to permit the audio output adding to the MPEG output and the MPEG input, three physical plugs are required and at the same time the configuration of the bus interface must be changed.

It can be considered to adopt a bus interface provided with three channels, but such bus interface is not preferable because the scale of the circuit gets big. Otherwise, it can be also considered to adopt a bus interface provided with an output channel and an input-output channel respectively, but in this configuration, as contrasted that there are three physical plugs, the channel numbers of the bus interface are two, therefore obtaining these channels causes the competition.

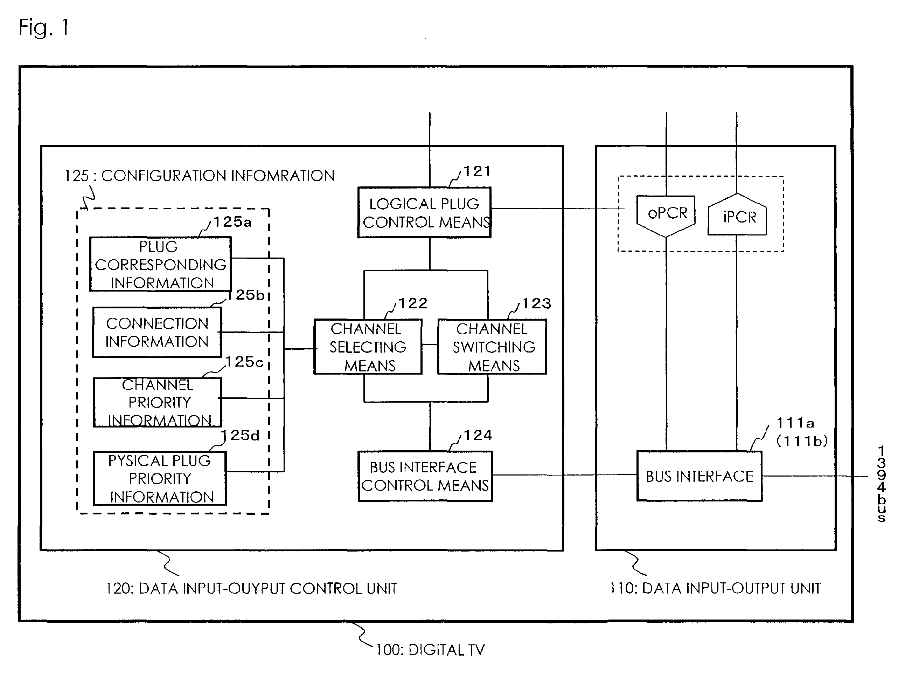

The invention is proposed based on the above problems in the prior art, and has an object to enable to perform the optimum control of the data input-output corresponding to the services provided by the digital device even in its configuration having the competition for the hardware resources. That is to say, as shown in Fig.1, the invention presupposes a digital device 100 capable of inputting data from the other specific digital device into a plug and outputting data from a plug to the other specific digital device by using channels of the bus interface 111a.

The configuration information 125 may be registered in advance in the digital device 100, the configuration information includes at least the connection information 125b between the channel of the bus interface 111a and the plug, and the channel priority information 125c of the bus interface 111a judged from the aspect of each plug. Under this arrangement, the channel selecting means 122 can select the channel with the highest priority among the channels of the bus interface 111a connected with the specific plug by referring to the configuration information 125.

In addition, if the configuration information can further include the plug priority information 125d judged from the aspect of each channel of the bus interface 111a, even in case of the competition for the channels of the bus interface 111a, the channel switching means 123 can switch the channel to the plug with the highest priority among the plugs in competition, by referring to the configuration information 125.

As described above, even if the configuration has the competition for the channels of the bus interface 111a, the invention can perform the optimum control of the data input-output corresponding to the services provided by the digital device 100.

Fig. 1 is a block diagram of a main part of a digital TV to which the invention is applied.

Fig. 2 is a conceptual diagram of the data input-output unit of the first embodiment.

Fig. 3 is a list of combinations of channels applicable to the first embodiment.

Fig.4 is configuration information in the first embodiment.

Fig. 5 is a flowchart showing a procedure of data input-output in the first embodiment.

Fig. 6 is a flowchart showing a procedure of data input-output in the first embodiment.

Fig. 7 is a conceptual diagram of a data input-output unit in the second embodiment.

Fig.8 is a list of combinations of channels applicable to the second embodiment.

Fig. 9 is configuration information in the second embodiment.

Fig. 10 is a conceptual diagram of the data input-output unit of the third embodiment (the unacceptable example).

Fig. 11 is a conceptual diagram of the data input-output unit of the third embodiment.

Fig. 12 is configuration information in the third embodiment.

Fig. 13 is a conceptual diagram of the other data input-output unit of the third embodiment.

Fig. 14 is the other configuration information in the third embodiment.

Fig. 15 is a flowchart showing a procedure of data input-output in the third embodiment.

Fig. 16 is an explanatory diagram of the input-output technology of the isochronous stream.

Fig. 17 is a format of oPCR.

Fig. 18 is a format of iPCR.

Fig. 19 is a diagram showing the state of plugs.

Fig. 20 is a flowchart showing a procedure of data input-output in the prior art.

Fig. 21 is a conceptual diagram of the data input-output unit in the prior art.

Fig. 22 is a conceptual diagram of the data input-output unit in the prior art.

Fig. 1 is a block diagram of the main part of a digital TV 100 to which the invention is applied, and the configuration is explained here regarding the different points from that of the prior art. In the following description, a "channel" merely indicates the channel of a bus interface 111a(111b), but not the isochronous channel.

### [EMBODIMENT 1]

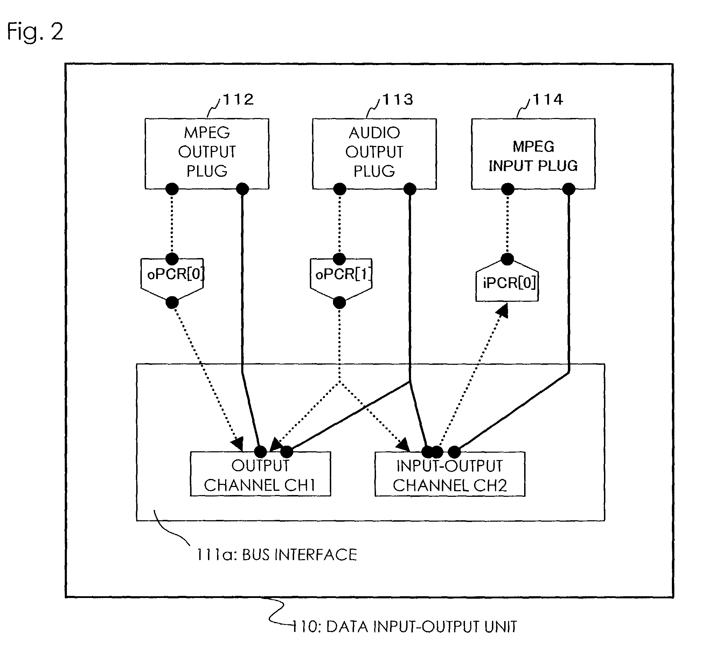

The invention of this embodiment has an object to provide a digital TV 100 that is capable of outputting MPEG data (that is called MPEG output), outputting audio data, and inputting MPEG data (that is called MPEG input). As shown in Fig. 2, the digital TV 100 is provided with a MPEG output plug 112, an audio output plug 113 and a MPEG input plug 114. On the other hand, it is configured that a bus interface is provided with an output channel CH1 and an input-output channel CH2 respectively in order that the circuit size does not get big.

Accordingly, while there are three physical plugs, there are only two channels that the bus interface 111a has. This becomes the cause of the competition for those channels. Therefore, it is arranged that configuration information 125, which will be described later, be previously registered in the digital TV 100.

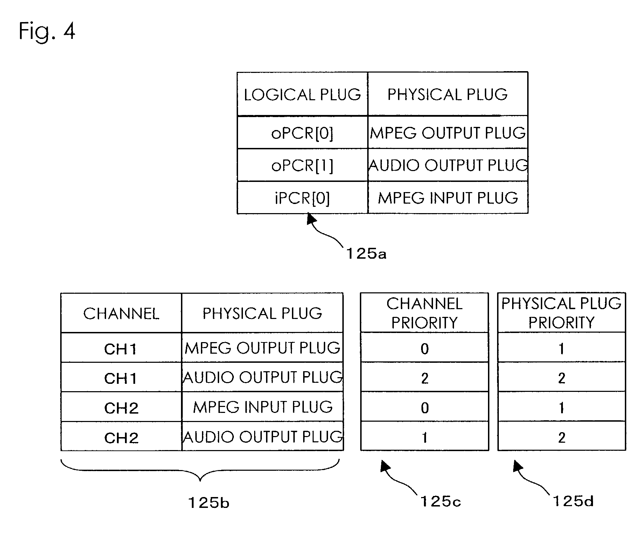

That is to say, the configuration information 125 is the basis of the data input-output control, and comprises plug information 125a, connection information 125b, channel priority information 125c, and physical plug priority information 152d, as shown in Fig. 4.

The plug information 125a indicates the correlation between a physical plug and a logical plug, and the connection information 125b represents the condition of connecting a physical plug and the bus interface 111a. In addition, the channel priority information 125c indicates the priority order of channel judged from the aspect of each physical plug, (that is to say, the order of priority given to each channel connected with a specific plug); the physical plug priority information 125d indicates the priority order of physical plug judged from the aspect of each channel, (that is to say, the order of priority given to each physical plug connected with a specific channel).

The descriptive procedure of the plug information 125a and the connection information 125b is not explained here because it is easy to understand it according to Fig. 2. But here is explained about the descriptive procedures of the channel priority information 125c and the physical plug priority information 125d.

First of all, those priority information 125c and 125d have the contents depending on the services provided by a digital device to be a descriptive object. Since the invention of this embodiment presupposes the digital TV, the MPEG input and the MPEG output should have priority over the audio output, while the combination of the MPEG output and the audio output should have priority over that of the MPEG input and the audio output.

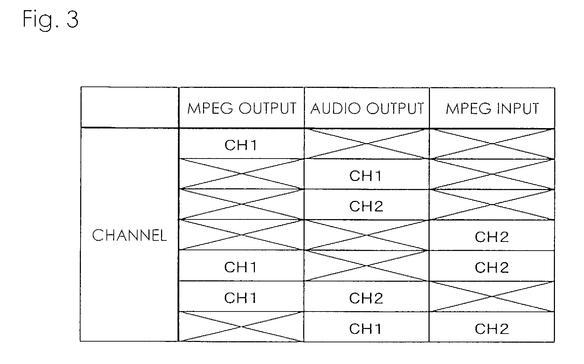

Besides, there is no problem regarding the priority order of the MPEG input and the MPEG output, this is the reason why the execution of those processing does not cause the competition for the channels. That is to say, as shown in Fig. 3, a channel to be used for the MPEG output is always the output channel CH1, and a channel to be used for the MPEG input is always the input-output channel CH2. Contrarily, the audio output has the alternative of the output channel CH1 or the input-output channel CH2.

Here, the priority of physical plugs may be considered based on the aspect of each cannel in order to give priority to the MPEG input and the MPEG output rather than the audio output. That is to say, in case of judging from the aspect of the output channel CH1, the MPEG output plug 112 may take priority over the audio output plug 113, on the other hand, in case of judging from the aspect of the input-output channel CH2, the MPEG input plug 114 may take priority over the audio output plug 113.

Therefore, as shown in Fig. 4, "1" representing the first order of the priority is registered previously in both the priority information 125d of the MPEG output plug 112 judged from the aspect of the output channel CH1, and that of the MPEG input plug 114 judged from the aspect of the input-output channel CH2. In addition, though the second order of the priority is represented by "2", "2" is registered previously in both the priority information 125d of the audio output plug 113 judged from the aspect of the output channel CH1 and that of the audio output plug 113 judged from the aspect of the input-output channel CH2. That is to say, as the priority order gets lower, the number registered in the priority information gets large (then, the registration procedure is performed for the channel priority information 125c in the same way as described below).

On the other hand, in order that the combination of MPEG output and audio output takes priority over the combination of MPEG input and audio output, the priority of channels must be considered judging from the aspect of each physical plug. That is to say, in case of judging from the aspect of the audio output plug 113, the input-output channel CH2 may take priority over the output channel CH1 so as not to compete with each other for the output channel CH1 at the time of performing the MPEG output and audio output together.

Therefore, as shown in Fig. 4, "2" is previously registered in the priority information 125c of the output channel CH1 judged from the audio output plug 113, while "1" is previously registered in the priority information 125c of the input-output channel CH2 judged from the aspect of the audio output plug 113. In addition, it is only the output channel CH1 that the MPEG output plug 112 uses, while it is only the input-output channel CH2 that the MPEG input plug 114. Accordingly, in both the priority information 125c of the output channel CH1 judged from the aspect of the MPEG output plug 112 and the priority information 125c of the input-output channel CH2 judged from the aspect of the MPEG input plug 114, "0" representing the fixed status is registered in advance.

The digital VHS 200 records the video data being received by the digital TV 100 in which the configuration information 125 is registered, and at the same time the digital audio device reproduces the audio data that the digital TV 100 is receiving; such data input-output procedure is explained as follows.

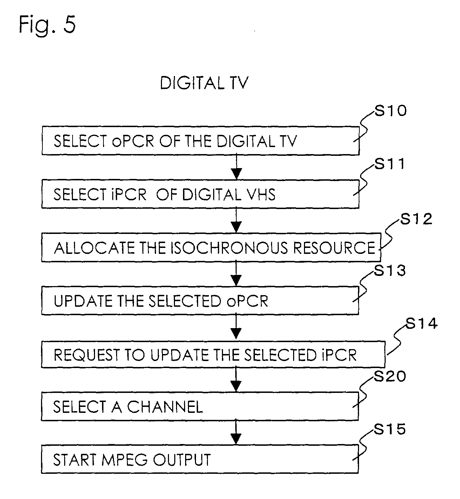

The data input-output procedure when the digital VHS 200 records the video data being received by the digital TV 100 is basically the same as that of the prior art described above (See Fig. 20) other than the channel selecting step (Fig.5, Step S20).

That is to say, after receiving from a host processor the instruction to output the video data to the digital VHS 200, the logical plug control means 121 of the data input-output control unit 120 selects the oPCR [0] of the digital TV 100 and the iPCR [0] of the digital VHS 200 and then allocates an isochronous resource. After that, the logical plug control means 121 updates the oPCR [0] and sends the digital VHS 200 the transaction information to update the iPCR [0] (Fig. 5, Step S10 to S14).

Here, the logical plug control means 121 instructs the channel selecting means 122 to select a channel to be used by the oPCR [0]. After selecting an optimum channel according to the following procedure in response to this instruction, the channel selecting means 122 notifies the bus interface control means 124 of the result of the selecting (Fig. 5, Step S20).

That is to say, the channel selecting means 122 first judges by referring to the plug information 125a that the oPCR [0] is correlated with to the MPEG output plug 112, and next judges by referring to the connection information 125b that the MPEG output plug 112 is connected with the output channel CH1. In addition, after judging by referring to the channel priority information 125c that the output channel CH1 is an optimum channel, the channel selecting means 122 selects the output channel CH1.

Thereby, the bus interface control means 124 can control the bus interface 111a so as to output the MPEG stream by using the selected output channel CH1 (Fig. 5, Step S15).

The data input-output procedure when the digital audio device reproduces the audio data being received by the digital TV 100 is also the same basically as that of the prior art (Fig. 20) other than the channel selecting. Accordingly, the following description refers to only the point regarding the channel selecting, but the explanation of the flowchart is omitted here.

That is to say, when receiving from the host processor the instruction to output the audio data to the digital audio device, the logical plug control means 121 of the data input-output control unit 120 instructs the chancel selecting means 122 to select a channel to be used by the oPCR [1] of the digital TV 100. In response to the instruction, the channel selecting means 122 selects a optimum channel according to the following procedure, and then notifies the bus interface control means 124 of the result of the selecting.

In other words, the channel selecting means 122, first judges by referring to the plug information 125a that the oPCR [1] is correlated with the audio output plug 113, and then judges by referring to connection information 125b that the audio output plug 113 is connected with both the output channel CH1 and the input-output channel CH2. In addition, by referring to the channel priority information 125c, it is judged that the input-output channel CH2 has priority over the output channel CH1; the input-output channel CH2 is selected.

Thereby, the bus interface control means 124 can control the bus interface 111a to output the audio stream by using the input-output channel CH2 selected as above.

As a result of the above, the digital VHS 200 records the video data being received by the digital TV 100, at the same time, the digital audio device reproduces the audio data being received by the digital TV 100.

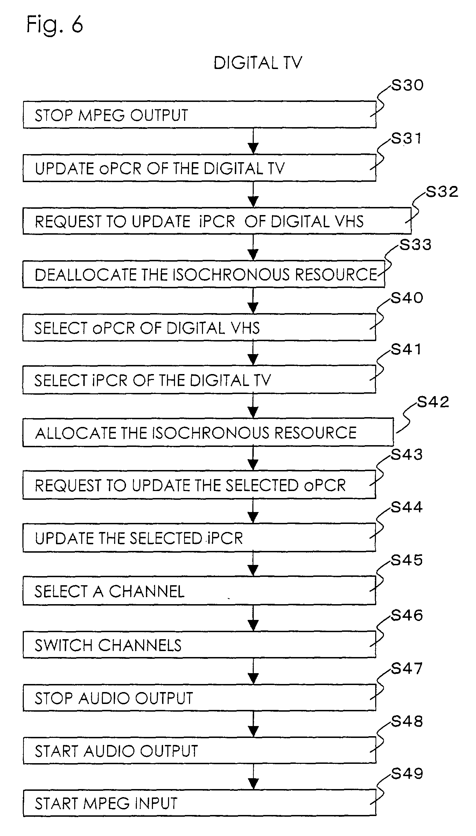

Here, an example of data input-output procedure in case of the competition for the channel, specifically the case where, after the digital VHS 200 stops the recording, the digital TV 100 displays the video data that the digital VHS 200 has recorded; such procedure is explained according to the flowchart shown in Fig. 6.

First of all, on receiving from the host processor the instruction to stop the MPEG output to the digital VHS 200, the bus interface control means 124 of the data input-output control unit 120 stops the MPEG output from the output channel CH1 by means of controlling the bus interface 111a (Fig. 6, Step S30).

Thereby, the point-to-point connection is disconnected. At this time, while subtracting 1 from the value of the "point-to-point connection counter" area A13 of the oPCR [0] of the digital TV100, the logical plug control means 121 sends the digital VHS 200 the lock transaction information to subtract 1 from the value of the "point-to-point connection counter" area A23 of iPCR[0], and then deallocats the resource kept for the isochronous transfer (Fig. 6, Step S31 to S32 to S33).

In addition, when receiving from the host processor the instruction to input the MPEG stream from the digital VHS 200 to the digital TV 100, the logical plug control means 121 selects the oPCR [0] of the digital VHS 200 and the iPCR [0] of the digital TV 100, and then allocates the isochronous resource (Fig. 6, Step S40 to S41 to S42).

Moreover, the logical plug control means 121 sends the digital VHS 200 the lock transaction information to update the oPCR [0] together with updating the iPCR [0] (Fig. 6, Step S43 to 45).

Here, the logical plug control means 121 instructs the channel selecting means 122 to select the channel to be used by the iPCR [0], in response to the instruction, the channel selecting means 122 selects the optimum channel according to the following procedure (Fig. 6, Step S45).

That is to say, the channel selecting means 122, first referring to the plug information 125a, judges that the iPCR [0] is correlated with the MPEG input plug 114. And next, referring to the connection information 125b, the channel selecting means 122 judges that the MPEG input plug 114 is connected with the input-output channel CH2, and then judges referring to the channel priority information 125c that the input-output channel CH2 is the optimum one.

However, since the input-output channel CH2 is used at this time for the output of the audio stream, the channel selecting means 122 refers to the physical plug priority information 125d and compares the priority of the audio output plug 113 and that of the MPEG input plug 114. When the priority order of the MPEG input plug 114 is higher, the channel selecting means 122 notifies the channel switching means 123 of the compared result. When the priority order of the audio output plug 113 is higher, the intention that the MPEG input cannot be performed is notified to the host processor.

Here, as shown in Fig. 4, since the priority information 125d of the audio output plug 113 judged from the aspect of the input-output channel CH2 is "2" while the priority information 125d of the MPEG input plug 114 judged from the aspect of the input-output channel CH2 is "1", those priority information 125d are sent to the channel switching means 125. In response to the notification, the channel switching means 123 switches the input-output channel CH2 for the MPEG input plug 114, and the output channel CH1 (which has the priority order subordinate to the input-output channel CH2) for the audio output plug 113, and then notifies the bus interface control means 124 of the result of the switching (Fig. 6, Step S46).

As a result of the above, the bus interface control means 124 stops the audio output using the input-output channel CH2, and then starts the audio output by using the output channel CH1. Additionally, the bus interface 124 starts the MPEG input by using the input-output channel CH2 (Fig. 6, Step S47 to S48 to S49).

As described above, the invention can perform the data input-output control corresponding to the services provided by the digital device even under the configuration having the competition for the hardware resources.

Besides, when the MPEG input from the input-output channel CH2 stops, the input-output channel CH2 is not occupied. Therefore, the channel switching means 123 may switch the channel to be used by the audio output plug 113 to the input-output channel CH2 (which has priority over the output channel CH1).

Furthermore, in the above description, although assuming that the configuration information 125 is previously registered in the digital device 100, it may use the configuration information 125 downloaded from a computer connected via network. According to such configuration, it is possible to perform the processing immediately even when it is necessary to change the contents of the data input-output control.

### [EMBODIMENT 2]

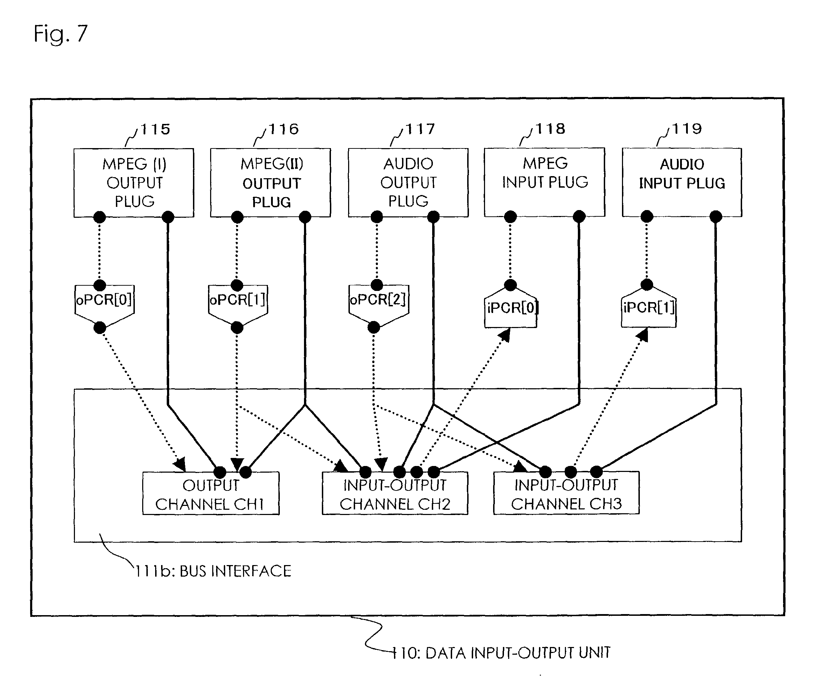

The invention of this embodiment has an object to provide a digital device that can perform two types of the MPEG output (that is to say, the MPEG(I) output and the MPEG(II) output), the audio output, the MPEG input, and the audio input. The digital device comprises as shown in Fig. 7 a MPEG(I) output plug 115, a MPEG(II) output plug 116, an audio output plug 117, a MPEG input plug 118, and an audio input plug 119. On the other hand, the bus interface 111b is configured to comprise an output channel CH1, an input-output channel CH2, and an input-output channel CH3. Therefore, while there are three channels that the bus interface 111b has, there are five physical plugs, as a result the competition for the channels may occur.

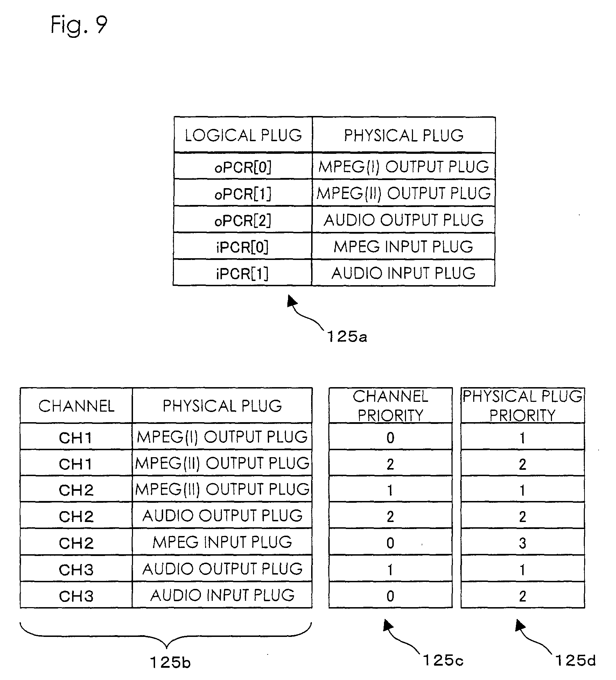

The descriptive procedure of the channel priority information 125c and the physical plug priority information 125d in this embodiment will be described hereafter referring to Fig.9.

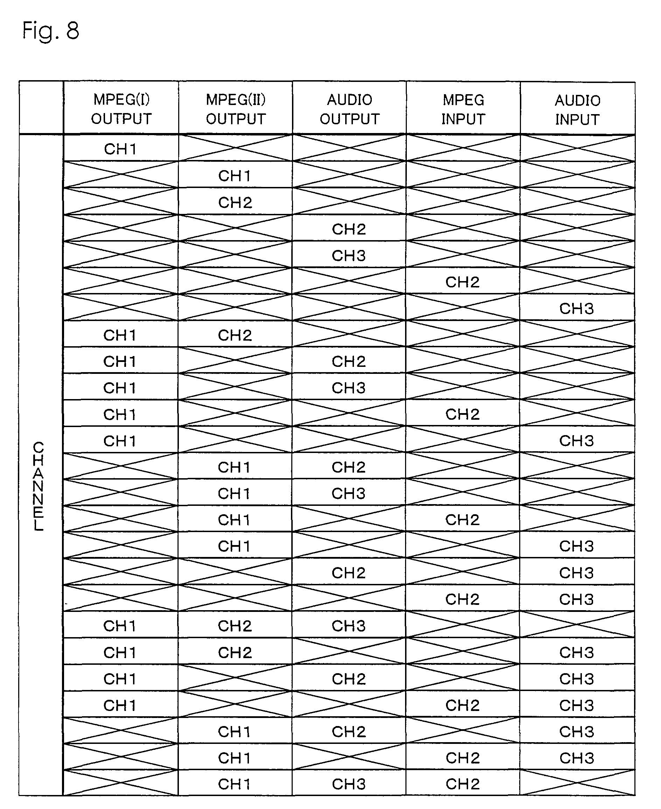

First, it is assumed that the priority is given in the following arranged order; the MPEG(I) output→the MPEG(II) output→the audio output→the MPEG input→the audio input, and the combination of the MPEG(I) output and the MPEG(II) output takes the highest priority over the other combinations (See Fig. 8).

In order to give the priority in the arranged order, the MPEG (I) output→the MPEG(II) output→the audio output→the MPEG input→ the audio input, the priority order of the physical plugs is considered from the aspect of each channel. That is to say, in case of judging from the aspect of the output channel CH1, the priority may be given in the arranged order, the MPEG(I) output plug 115 →the MPEG(II) output plug 116. In case of judging from the aspect of the input-output channel CH2, the priority may be given in the arranged order, the MPEG(II) output plug 116→the audio output plug 117→the MPEG input plug 118. In case of judging from the aspect of the input-output channel CH3, the priority may be given in the arranged order, the audio output plug 117→ the audio input plug 119.

Therefore, as shown in Fig.9, "1" is registered in advance respectively in the priority information 125d of the MPEG(I) output plug 115 judged from the aspect of the output channel CH1, the priority information 125d of the MPEG(II) output plug 116 judged from the aspect of the input-output channel CH2, and the priority information 125d of the audio output plug 117 judged from the aspect of the input-output channel CH3. And "2" is registered in advance respectively in the priority information 125d of the MPEG(II) output plug 116 judged from the aspect of the output channel CH1, the priority information 125d of the audio output plug 117 judged from the aspect of the input-output channel CH2, and the priority information 125d of the audio input plug 119 judged from the aspect of the input-output channel CH3. In addition, "3" is previously registered in the priority information 125d of the MPEG input plug 118 judged from the aspect of the input-output channel CH2.

On the other hand, in order that the combination of the MPEG(I) output, the MPEG(II) output and the audio output takes the priority over the other combination, the priority of the channel should be considered from the aspect of each physical plug. That is to say, in order not to generate the competition for the output channel CH1 and the input-output channel CH2 when the processing of the MPEG(I) output, the MPEG(II) output and the audio output are performed together, it is preferable that the input-output channel CH2 may takes priority over the output channel CH1 in case of judging from the aspect of the MPEG(II) output plug 116, while it is preferable that the input-output channel CH3 may takes priority over the input-output channel CH2 in case of judging from the aspect of the audio output plug 117.

Therefore, as shown in Fig.9, "1" is registered respectively in the priority information 125c of the input-output channel CH2 judged from the aspect of the MPEG(II) output plug 116, and the priority information 125d of the input-output channel CH3 judged from the aspect of the audio output plug 117. And "2" is registered respectively in the priority information 125c of the output channel CH1 judged from the aspect of the MPEG(II) output plug 116, and the priority information 125c of the input-output channel CH2 judged from the aspect of the audio output plug 117.

It is only the output channel CH1 that the MPEG(I) output plug 115 uses, while it is only the input-output channel CH2 that the MPEG input plug 118 uses. And it is only the input-output channel CH3 that the audio input plug 119 uses. Therefore, it is "0" that is registered respectively in the priority information 125c of the output channel CH1 judged from the aspect of the MPEG(I) output plug 115, the priority information 125c of the input-output channel CH2 judged from the aspect of the MPEG input plug 118, and the priority information 125c of the input-output channel CH3 judged from the aspect of the audio input plug 119.

It is needless to say that the digital device in which the configuration information is set up as above performs the data input-output control corresponding to the contents of the configuration (the channel selecting and the channel switching). That is to say, since the data input-output control of the invention is based on only the configuration information 125, even when it is necessary to change the contents of the data input-output control according to the change of the services provided by the digital device, it is possible to perform the corresponding processing immediately.

The applicable field of the invention is not restricted to IEEE 1394. That is to say, it is possible to apply the invention to a digital device that controls the data input-output, if the device requires the optimum channel selecting and the channel switching.

Besides the configuration information 125 may have the contents that a digital device to be an object of the setup performs the optimum channel selecting and the channel switching, and the contents can be determined by the method that is not subjected to the above descriptive procedure.

Furthermore, if the digital device is provided with only the data input-output control unit (the data input-output control system) 120, it is needless to say that it is possible to obtain the effect of the invention.

### [EMBODIMENT 3]

Recently people give attention to a digital device that is called a HDD built-in STB. The HDD built-in STB is a set-top box incorporated with a hard disk, and the STB is a broadcasting receiving terminal having the decoding function of MPEG2.

The following explanation refers to a technology to switch and output MPEG2 stream received by a tuner of the STB (which is called MPEG(A) stream hereafter) and MPEG2 stream stored in the hard disk (which is called MPEG(B) stream hereafter) toward other nodes. Such technology can provide the HDD built-in STB wherein video data to be outputted to the digital VHS be switched, for example, from MPEG(A) stream to MPEG(B) stream or from MPEG(B) stream to MPEG(A) stream, like the input switching function in the television can switch the television and the video input.

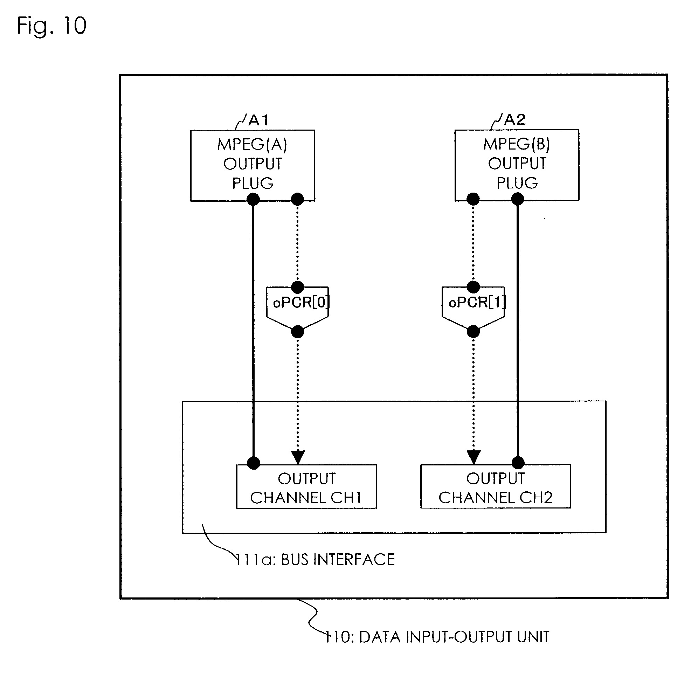

First, as shown in Fig.10, the following can be suggested as a method for carrying out the switching: under the condition that a MPEG(A) output plug A1 is connected with an output channel CH1, while a MPEG(B) output plug A2 is connected with an output channel CH2, the MPEG(A) stream and the MPEG(B) stream should use a respective oPCR. That is to say, when the MPEG(A) stream is outputted to the digital VHS, oPCR[0] should be used. On the other hand, when the MPEG(B) stream is outputted to the digital VHS, oPCR[1] should be used.

However, that switching method is not preferable because an isochronous resource once allocated has to be deallocatd and then allocated again immediately. That is to say, if it is taken a procedure that the connection between the HDD built-in STB and the digital VHS is disconnected temporarily and then established again, there is a possibility that any trouble occurs in the middle of the procedure (there is a regulation of the standard that the connection established by the other node mustn't be disconnected arbitrarily).

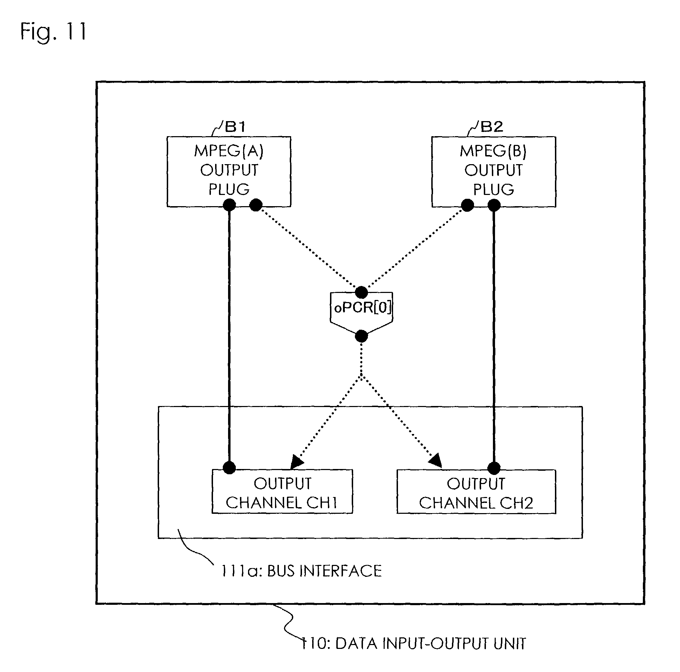

Therefore, as shown in Fig. 11, the invention adopts a method that the oPCR is common to the MPEG (A) stream and the MPEG(B) stream, that is to say, a method that one oPCR can be substituted for a plurality of oPCR of MPEG2 stream. The data input-output procedure, when the video data outputted from the HDD built-in STB to the digital VHS is switched from the MPEG(A) stream to the MPEG(B) stream, will be explained hereafter. And the following explanation is made according to the configuration of the HDD built-in STB by using the same numerals as that of the digital TV 100.

First, when the HDD built-in STB 100 outputs the MPEG(A) stream to the digital VHS 200, the data input-output procedure is basically the same as that of the first embodiment (Fig. 5).

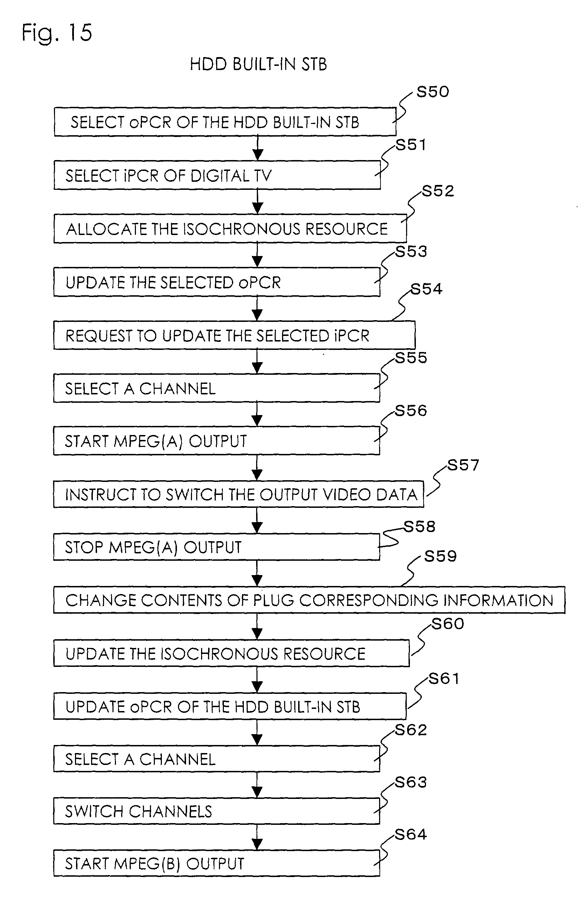

That is to say, when receiving from the host processor (not shown) the instruction to output the MPEG(A) stream to the digital VHS 200, the logical plug control means 121 of the data input-output control unit 120 selects the oPCR[0] of the HDD built-in STB 100 and the iPCR[0] of the digital VHS 200. After allocating the isochronous resource, the logical plug control means 121 updates the oPCR[0] and then sends the digital VHS 200 the lock transaction information to update the iPCR[0] (Fig.15, Step S50 to S54)

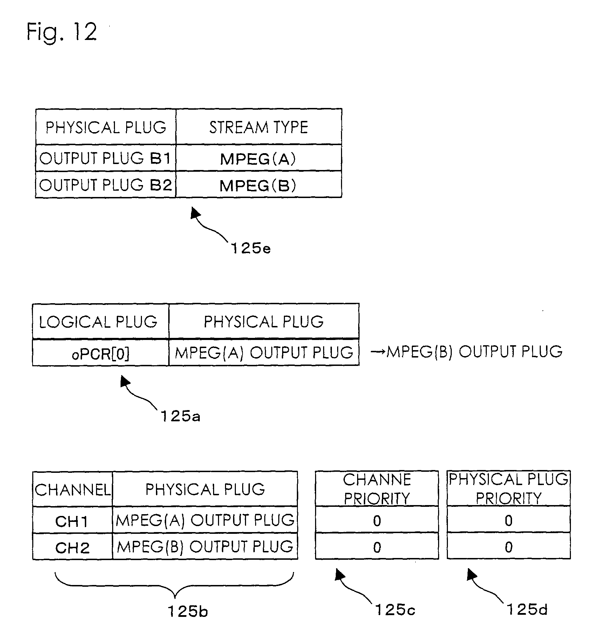

Here, the logical plug control means 121 instructs the channel selecting means 122 to select a channel to be used by the oPCR[0]. In response to the instruction, the channel selecting means 122 takes the following procedure: to select a optimum channel referring to the configuration information 125 (See Fig. 12), and then notifies the bus interface 124 of the result of the selection (Fig. 15, Step S55)

That is to say, the channel selecting means 122, at first referring to plug information 125a, judges that the oPCR[0] is correlated with the MPEG(A) output plug B1. Next, referring to the connection information 125b, the channel selecting means 122 judges that the MPEG(A) output plug B1 is connected with output channel CH1. Then referring to the channel priority information 125c, the channel selecting means 122 judges that the output channel CH1 is the optimum channel, accordingly the output channel CH1 is selected.

However, since the configuration shown in Fig. 11 does not have a competition for the channels of the bus interface, the channel selecting step S55 can be skipped. And in case of skipping the channel selecting step S55, the configuration information 125 may not be required, too.

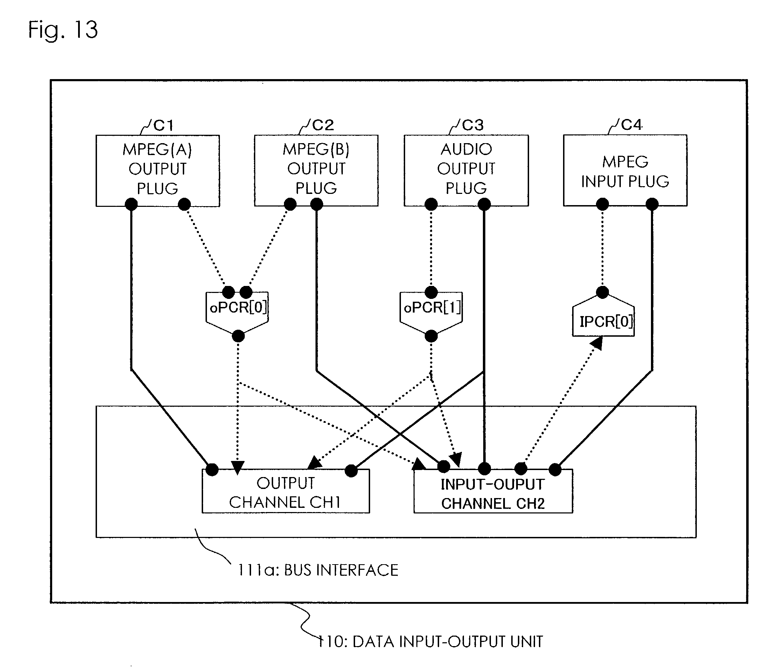

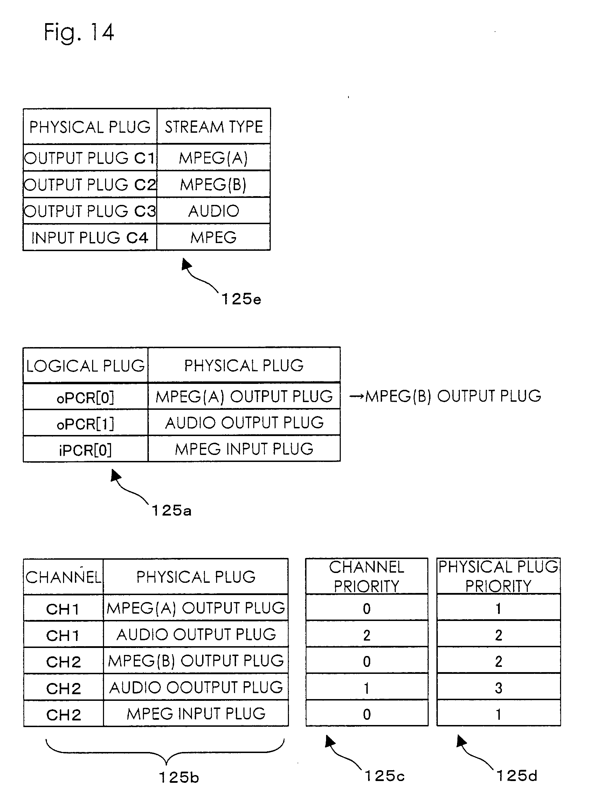

Contrarily, as shown in Fig. 13, when the channel switching method of the invention is applied to the configuration having a competition for the channel, the channel selecting step S55 mustn't be skipped. In this case, the configuration information shown in Fig.14 should be registered in the HDD built-in STB 100.

After that, the bus interface control means 124 can control the bus interface 111a so as to output MPEG(A) stream using the output channel CH1 selected as above (Fig. 15, Step S56).

Here, when a user instructs the HDD built-in STB that the audio data to be outputted to the digital VHS 200 is changed from the MPEG(A) stream to the MPEG(B) stream (Fig. 15, Step S57), the instruction is accepted by the bus interface control means 124 and the logical plug control means 121 of the data input-output control unit 120 through the host processor. Besides, the time when the user issues the instruction of the switching to the HDD built-in STB is not restricted to this. In other words, if the switching time is predetermined, when the time has come the host processor sends the instruction of the switching to the bus interface control means 124 and the logical plug control means 121. In such configuration, it is possible to obtain the same effect.

Therefore, the bus interface control means 124 can control the bus interface 111a, and then can stop the MPEG(A) output from the output channel CH1 (Fig. 15, Step S58).

On the other hand, the logical plug control means 121 recognizes referring to the stream type information 125e that a physical plug for the MPEG(B) output is a MPEG(B) output plug B2, and then changed the contents of the plug information 125a (Fig. 15, Step S59). That is to say, the content that the oPCR[0] is correlated with the MPEG(A) output plug B1 is changed to the content that the oPCR[0] is correlated with the MPEG(B) output plug B2.

Next, when the MPEG(A) and the MPEG(B) differ in the bandwidth, the logical plug control means 121 updates the isochronous resource (in this case the bandwidth only) and then changes the value of the "payload" area A17 of the oPCR[0] (Fig. 5, Step S60 to S61). Besides, the explanation regarding the "payload" area A17 was described above, and is not made here.

In addition, the logical plug control means 121 instructs the channel selecting means 122 to select a channel to be used by the oPCR[0] of the HDD built-in STB100. The channel selecting means 122 on receiving the instruction selects an optimum channel and then notifies the bus interface control means 124 of the result of the selection (Fig. 15, Step S62).

That is to say, the channel selecting means 122, first referring to the plug information 125a, judges that the oPCR[0] is correlated with the MPEG(B) output plug B2. Next, the channel selecting means 122 referring to the connection information 125b judges that the MPEG(B) output plug B2 is connected with the output channel CH2, and then referring to the channel priority information 125c judges that the output channel is an optimum channel, as a result the output channel CH2 is selected.

However, since the configuration shown in Fig. 11 does not have a competition for the channels of the bus interface 111a, the channel selecting step S58 may be skipped like the channel selecting step S55. Contrarily, when the switching method of the invention is applied to the configuration shown in Fig.13 having a competition for the channels, the channel switching step S58 must not be skipped.

In addition, since the configuration shown in Fig. 11 does not have a competition for the channels of the bus interface 111a, the output channel CH2 selected as above is always unoccupied. Contrarily, the switching method of the invention is applied to the configuration in Fig. 13 that has the competition for the channels, the input-output channel CH2 selected as an optimum channel by the channel selecting means 122 is occasionally occupied because it can output the audio stream (or input the MPEG). Therefore, the channel switching means 123 has to be activated in this case. Since the function of the channel switching means 123 is the same as that of the first embodiment, the detailed explanation is node made here (Fig. 15, Step S63).

Therefore, the bus interface control means 124 can control the bus interface 111a so as to output the MPEG(B) stream using the output channel CH2 selected as above (Fig.15, Step S64).

As described above, since the HDD built-in STB100 to which the invention is applied adopts the method that one oPCR of MPEG2 can be substituted for a plural oPCR, the video data outputted to the digital VHS 200 can be changed from MPEG(A) stream to MPEG(B) stream, or from MPEG(B) stream to MPEG(A) stream without taking a procedure that the connection between the HDD built-in STB 100 and the digital VHS 200 is once disconnected and then established again.

Besides, though the embodiment of the invention takes as an example the operation that the video data outputted from the HDD built-in STB to the digital VHS is changed from the MPEG(A) stream to the MPEG(B) stream, the resource outputting the video data is not restricted to the HDD built-in STB, and the destination to which the video data is inputted is not restricted to the digital VHS. That is to say, a digital device, if provided with the same function, can be an output resource or a destination of output.

In addition, the streams to be an object of the switching is not restricted to the MPEG(A) stream and the MPEG(B) stream. That is to say, the stream, if having the same type of format, can be changed according to the same procedure as above. Moreover, the SD (standard Definition) stream of MPEG2 and the HD (High definition) stream of MPEG2 is equivalent to the one having the same type of format.

## Claims

1. A digital device for inputting data from the other specific digital device to a physical plug and outputting data from a physical plug to the other specific digital device by using a channel of a bus interface, which comprising:
configuration information including connection information between a channel of a bus interface and a physical plug, and priority information of channels of a bus interface judged from the aspect of each physical plug; and
channel selecting means selecting a channel with the highest priority among channels of a bus interface connected with the specific physical plug by referring to the configuration information.

2. A digital device according to claim 1, which comprising:
the configuration information further including priority information of physical plugs judged from the aspect of each channel of a bus interface; and
channel switching means, in case of the competition for the channels of the bus interface, switching the channel to a physical plug with the highest priority among physical plugs in competition by referring to the configuration information.

3. A digital device for controlling by a physical plug to output data from a physical plug to the other specific digital device by using a channel of a bus interface, wherein, in case of outputting data having the same type of format from a plural physical plug, the data output having the same type of format is to be controlled by a logical plug.

4. A digital device according to either one of claim 1 to 3, wherein the data is synchronous stream one.

5. A digital device according to either one of claim 1 to 3, wherein the bus interface is compliant with the standard of IEEE1394.

6. A data input-output control method of a digital device for inputting data from the other specific digital device to a physical plug and outputting data from a physical plug to the other specific digital device by using a channel of a bus interface, which comprising a step of:
registering as configuration information at least connection information between a channel of a bus interface and a physical plug, and priority information of channels of a bus interface judged from the aspect of each physical plug; and
selecting a channel with the highest priority among channels of a bus interface connected with a specific physical plug by referring to the configuration information.

7. A data input-output control method of a digital device according to claim 6, which comprising a further step of:
registering as configuration information priority information of physical plugs judged from the aspect of each channel of a bus interface; and
in case of the competition for the channels of a bus interface, switching the channel to a physical plug with the highest priority among the physical plugs in competition by referring to the configuration information.

8. A data input-output control method of a digital device for controlling by a physical plug to output the data from a physical plug to the other specific digital device by using a channel of a bus interface, wherein, in case of outputting data having the same type of format from a plural physical plug, the data output having the same type of format is to be controlled by a logical plug.

9. Configuration information for implementing a data input-output control function of a digital device for inputting data from the other specific digital device to a physical plug and outputting data from a physical plug to the other specific digital device by using a channel of a bus interface, which comprising at least connection information between a channel of a bus interface and a physical plug, and priority information of channels of a bus interface judged from the aspect of each physical plug.

10. Configuration information according to claim 9, which further comprising priority information of physical plugs judged from the aspect of each channel of a bus interface.

11. A data input-output control system for controlling to input and output data between a specific digital device and the other specific digital device connected through a bus interface, which comprising:
configuration information including connection information between a channel of a bus interface and a physical plug, and priority information of channels of a bus interface judged from the aspect of each physical plug; and
channel selecting means selecting a channel with the highest priority among channels of a bus interface connected with the specific physical plug by referring to the configuration information.

12. A data input-output control system according to claim 11, which further comprising:
the configuration information including priority information of physical plugs judged from the aspect of each channel of a bus interface; and
channel switching means switching, in case of the competition for channels of a bus interface, the channel to a physical plug having the highest priority among physical plugs in competition by referring to the configuration information.
